# EUROPEAN PATENT APPLICATION

(11) **EP 3 979 046 A1**
(43) Date of publication of application: **06.04.2022**
(21) Application number: 20859159.4
(22) Date of filing: 21.07.2020
(51) Int. Cl.: G06F 3/01, G06K 9/00

(54) **CONTROL METHOD, CONTROL DEVICE, ELECTRONIC DEVICE AND STORAGE MEDIUM**

(30) Priority: 30.08.2019 CN 201910817693
(71) Applicant: GUANGDONG OPPO MOBILE TELECOMMUNICATIONS CORP., LTD., Dongguan, Guangdong 523860 (CN)
(72) Inventor: LIN, Yihong, Dongguan, Guangdong 523860 (CN)
(74) Representative: Taor, Simon Edward William
(86) International application number: PCT/CN2020/103341
(87) International publication number: WO 2021/036591

(57) **Abstract**

Provided are a control method, a control device, an electronic device (100), and a storage medium. The control method for the electronic device (100) including a camera includes: (010) detecting whether there is an external object within a predetermined range of the camera; (020) activating the camera to obtain an image of the external object when there is an external object within the predetermined range of the camera; and (030) identifying an action gesture of the external object based on the image of the external object.

## Description

### CROSS-REFERENCE TO RELATED APPLICATIONS

This application claims priority and rights of the Patent Application No. 201910817693.6, filed to the China National Intellectual Property Administration on August 30, 2019, which is incorporated herein by reference in its entirety.

### FIELD

The present disclosure relates to the field of display technologies, and particularly, to a control method, a control device, an electronic device, and a storage medium.

### BACKGROUND

In the related art, an electronic device, such as a mobile phone, a wearable device, etc., can obtain a gesture action by means of a camera, and the electronic device can be controlled to perform related operations based on the gesture action. For example, the electronic device can lock a screen based on the gesture action.

### SUMMARY

The present disclosure provides a control method, a control device, an electronic device, and a storage medium.

In the control method for an electronic device according to the embodiments of the present disclosure, the electronic device includes a camera, and the control method includes: detecting whether there is an external object within a predetermined range of the camera; activating the camera to obtain an image of the external object when there is an external object within the predetermined range of the camera; and identifying an action gesture of the external object based on the image of the external object.

The control device according to the embodiments of the present disclosure is applied in an electronic device, the electronic device includes a camera, and the control device includes: a detection module configured to detect whether there is an external object within a predetermined range of the camera; and a control module configured to activate the camera to obtain an image of the external object when there is an external object within the predetermined range of the camera, and identify an action gesture of the external object based on the image of the external object.

The electronic device according to the embodiments of the present disclosure includes a camera and a processor, and the processor is configured to detect whether there is an external object within a predetermined range of the camera, activate the camera to obtain an image of the external object when there is an external object within the predetermined range of the camera, and identify an action gesture of the external object based on the image of the external object.

A non-volatile computer-readable storage medium contains computer-executable instructions. The computer-executable instructions, when executed by one or more processors, cause the processor to implement the control method described above.

Additional aspects and advantages of the present disclosure will be partly given in the following description, partly become apparent from the following description, or be learned through the practice of the present disclosure.

### BRIEF DESCRIPTION OF DRAWINGS

The above and/or additional aspects and advantages of the present disclosure will become apparent and easy to understand from the description of embodiments with reference to the following drawings, in which:
FIG. 1 is a schematic three-dimensional diagram of an electronic device according to an embodiment of the present disclosure.
FIG. 2 is a cross-sectional view of an electronic device according to an embodiment of the present disclosure.
FIG. 3 is a cross-sectional view of an electronic device according to an embodiment of the present disclosure.
FIG. 4 is a cross-sectional view of an electronic device according to an embodiment of the present disclosure.
FIG. 5 is a cross-sectional view of a light-emitting component of an electronic device according to an embodiment of the present disclosure.
FIG. 6 is a cross-sectional view of a light-emitting component of an electronic device according to another embodiment of the present disclosure.
FIG. 7 is a schematic three-dimensional diagram of an electronic device according to an embodiment of the present disclosure.
FIG. 8 is a schematic diagram illustrating a principle structure of an electronic device according to an embodiment of the present disclosure.
FIG. 9 is a plan view of an electronic device according to another embodiment of the present disclosure.
FIG. 10 is a plan view of a partial structure of an electronic device according to an embodiment of the present disclosure.
FIG. 11 is a schematic diagram illustrating an adjustment process of an electronic device according to an embodiment of the present disclosure.
FIG. 12 is another schematic diagram illustrating an adjustment process of the electronic device according to the embodiment of the present disclosure.
FIG. 13 is a plan view of a partial structure of an electronic device according to another embodiment of the present disclosure.
FIG. 14 is a plan view of a light quantity adjustment component according to an embodiment of the present disclosure.
FIG. 15 is a graph illustrating a relation between ambient brightness and a light transmittance of a light quantity adjustment component according to an embodiment of the present disclosure.
FIG. 16 is a schematic diagram illustrating modules of an electronic device according to an embodiment of the present disclosure.
FIG. 17 is a schematic diagram illustrating modules of an electronic device according to another embodiment of the present disclosure.
FIG. 18 is a schematic diagram illustrating internal modules of an electronic device according to an embodiment of the present disclosure.
FIG. 19 is a schematic scene diagram of an electronic device according to an embodiment of the present disclosure.
FIG. 20 is a schematic flowchart of a control method according to an embodiment of the present disclosure.
FIG. 21 is a schematic diagram illustrating modules of a control device according to an embodiment of the present disclosure.
FIG. 22 is a schematic flowchart of a control method according to an embodiment of the present disclosure.
FIG. 23 is a schematic flowchart of a control method according to an embodiment of the present disclosure.
FIG. 24 is a schematic flowchart of a control method according to an embodiment of the present disclosure.

### Reference numerals of main components:

Electronic device 100, sensor assembly 10, light-emitting component 11, encapsulation casing 111, first light-emitting source 112, second light-emitting source 113, substrate 114, diffuser 115, depth camera 12, environment camera 13, light sensor 14, electrochromic device 120, antireflection film 130, housing 20, inner surface 201, outer surface 202, aperture 203, light-transmitting portion 204, receiving chamber 22, top housing wall 24, bottom housing wall 26, notch 262, side housing wall 28, support component 30, first bracket 32, first bending portion 322, second bracket 34, second bending portion 342, elastic band 36, display 40, refractive member 50, refractive chamber 52, light-transmitting liquid 54, first film layer 56, second film layer 58, side wall 59, adjustment mechanism 60, chamber body 62, sliding groove 622, sliding member 64, driving component 66, knob 662, screw 664, gear 666, rack 668, adjustment chamber 68, light-guiding component 70, first side 71, second side 72, light quantity adjustment member 80, first conductive layer 81, second conductive layer 82, electrochromic layer 83, electrolyte layer 84, ion storage layer 85, processor 90, collimating component 92, driving chip 94; control device 200, detection module 210, control module 220.

### DESCRIPTION OF EMBODIMENTS

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and they are intended to explain, rather than limiting, the present disclosure.

Different embodiments or examples are provided below for implementing various structures of the present disclosure. To simplify the present disclosure, components and arrangements of specific examples are provided below. Of course, the components and arrangements are illustrative only, and they are not intended to limit the present disclosure. Furthermore, reference numerals and/or letters may be repeated in different examples of the present disclosure. Such a repetition is for the purpose of simplification and clearness, rather than indicating relationships between various embodiments and/or arrangements discussed herein. In addition, the present disclosure provides examples of various specific processes and materials, but applications of other processes and/or usages of other materials may be appreciated by those skilled in the art.

An embodiment of the present disclosure provides an electronic device 100. For example, the electronic device 100 may be a mobile terminal such as a mobile phone, a tablet computer, a wearable device, etc. After a user wears the HMD device, the HMD device can transmit optical signals to the user's eyes in cooperation with a computing system and an optical system, thereby realizing different effects such as virtual reality (VR), augmented reality (AR), mixed reality (MR).

To facilitate understanding, the electronic device 100 according to the embodiment of the present disclosure is described in detail by taking the head-mounted display device as an example.

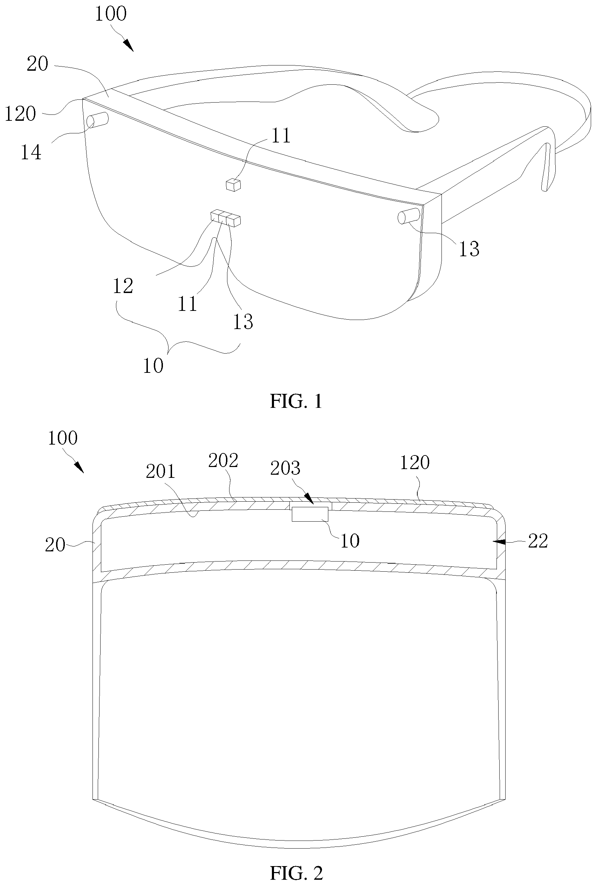

Referring to FIG. 1, the electronic device 100 according to the embodiment of the present disclosure includes a sensor assembly 10, a housing 20, and an electrochromic device 120. The sensor assembly 10 is arranged in the housing 20. The electrochromic device 120 is provided in the housing 20 and is arranged to correspond to the sensor assembly 10. The electrochromic device 120 covers the sensor assembly 10.

In the electronic device 100 according to the embodiment of the present disclosure, the electrochromic device 120 can change its light transmittance based on a state of the electronic device 100, thereby shielding or exposing the sensor assembly 10 to improve an appearance effect of the electronic device 100.

For example, the state of the electronic device 100 can be an operating state and a non-operating state. In the operating state of the electronic device 100, the electronic device 100 can display images, play videos, audios, and other information for a user, and can perform operations from the user. As an example, the electronic device 100 may switch a display picture in accordance with the user's operation. In an example, when the electronic device 100 is in the operating state, if the sensor assembly 10 is activated, then a light transmittance of the electrochromic device 120 can be controlled to increase to expose the sensor assembly 10, thereby obtaining external information of the electronic device 100 or transmitting information to the outside of the electronic device 100. If the sensor assembly 10 is deactivated, the light transmittance of the electrochromic device 120 can be controlled to decrease, so as to shield the sensor assembly 10, thereby improving the appearance effect of the electronic device 100.

The sensor assembly 10 includes at least one of a light-emitting component 11, a depth camera 12, an environment camera 13, a light sensor 14, or a proximity sensor 15. As an example, the sensor assembly 10 includes the depth camera 12, and the proximity sensor 15 or the light sensor 14. As another example, the sensor assembly 10 includes the depth camera 12 and the proximity sensor 15.

In this embodiment, the sensor assembly 10 includes a light-emitting component 11, a depth camera 12, an environment camera 13, and a proximity sensor 15. Accordingly, the light-emitting component 11, the depth camera 12, the environment camera 13, and the proximity sensor are all arranged in the housing 20. The electrochromic device 120 covers the light-emitting component 11, the depth camera 12 and the environment camera 13, and is configured to change its own light transmittance to shield or expose at least one of the light-emitting component 11, the depth camera 12, and the environment camera 13.

Specifically, the light-emitting component 11 is configured to emit light. The light-emitting component 11 may emit visible light, or invisible light such as infrared light.

The environmental camera 13 includes, but is not limited to, a color camera, an infrared camera, and a black and white camera. The electronic device 100 can capture an image of an object using the environment camera 13. In other words, the environment camera 13 is configured to obtain spatial environment information. The electronic device 100 can identify a type of an object based on the image captured by the environmental camera 13. For example, the electronic device 100 can identify that the object is a human hand or a table based on the image captured by the environment camera 13. In addition, the electronic device 100 may generate a spatial environment map based on the spatial environment information obtained by the environment camera 13.

The depth camera 12 includes, but is not limited to, a time of flight (TOF) camera or a structured camera. The depth camera 12 can obtain a depth image of the object. The depth image, after being processed, can be used to obtain a three-dimensional model of the object, identify an action, and the like.

The proximity sensor includes an infrared transmitter and an infrared receiver. The infrared transmitter and the infrared receiver can cooperate with each other to detect a distance between an external object and the electronic device 100.

The light sensor 14 can be configured to detect ambient brightness, and the electronic device 100 can a display image with appropriate brightness based on the ambient brightness, thereby improving the user experience.

The sensor assembly 10 can be directly or indirectly arranged on the housing 20. In an example, the sensor assembly 10 is arranged on the housing 20 via a bracket. In other words, the sensor assembly 10 is fixed on the bracket, and the bracket is fixed on the housing 20. One or more sensor assemblies 10 can be provided. As illustrated in FIG. 1, a plurality of sensor assemblies 10 is provided, and the plurality of sensor assemblies 10 can be provided at different positions of the housing 20, as long as the sensor assemblies 10 do not interfere with the normal use of the user.

It can be understood that the electrochromic device 120 may have different light transmittances corresponding to different applied voltages. In addition, the electrochromic device 120 can filter light of a predetermined color. For example, the electrochromic device 120 can filter colored light such as blue light.

The electrochromic device 120 is in a sheet-like form. The electrochromic device 120 may be disposed on the housing 20 or on the sensor assembly 10, or disposed between the housing 20 and the sensor assembly 10. As an example, the electrochromic device 120 may be pasted on the housing 20 or the sensor assembly 10 through an optical glue. As another example, the electrochromic device 120 may be disposed between the housing 20 and the sensor assembly 10 through a transparent frame, and the electrochromic device 120 is spaced apart from the sensor assembly 10 and the housing 20.

The electrochromic device 120 covering the sensor assembly 10 means that an orthographic projection of the sensor assembly 10 on the electrochromic device 120 is located within the electrochromic device 120. In other words, an orthographic projection of at least one of the light-emitting component 11, the depth camera 12, the environment camera 13, and the proximity sensor is located within the electrochromic device 120.

It can be understood that a plurality of electrochromic devices 120 may be provided, and each electrochromic device 120 corresponds to one of the light-emitting component 11, the depth camera 12, the environment camera 13, and the proximity sensor.

Referring to FIG. 2, in some embodiments, the housing 20 includes an inner surface 201 and an outer surface 202. An aperture 203 penetrating the inner surface 201 and the outer surface 202 is defined on the housing 20. The sensor assembly 10 is arranged to correspond to the aperture 203 and the electrochromic device 120 is attached to the outer surface 202 of the housing 20. That is, at least one of the light-emitting component 11, the depth camera 12, the environment camera 13, and the proximity sensor is arranged to correspond to the aperture 203.

In this way, the sensor assembly 10 can transmit signals to the outside and/or receive signals from the outside via the aperture 203. The electrochromic device 120 may shield the aperture 203 and cover the sensor assembly 10. It can be understood that, when the sensor assembly 10 transmits a signal to the outside, the signal is transmitted through the aperture 203 and the electrochromic device 120.

The aperture 203 may be a through hole in a round shape, an elliptical shape, or a square shape, etc., and a shape of the aperture 203 is not limited in the present disclosure. One or more apertures 203 may be provided. For example, one aperture 203 is provided when the light-emitting component 11, the depth camera 12, the environment camera 13, and the proximity sensor are arranged close to each other or formed into one piece. When the light-emitting component 11, the depth camera 12, the environment camera 13, and the proximity sensor are spaced apart from each other, a plurality of apertures 203 is provided. The light-emitting component 11, the depth camera 12, the environment camera 13, and the proximity sensor may be arranged to correspond to one same aperture 203.

It should be noted that a receiving chamber 22 is defined by the housing 20, and the inner surface 201 of the housing 20 is a surface defining the receiving chamber. The outer surface 202 of the housing 20 is opposite to the inner surface 201 of the housing 20. The sensor assembly 10 is received in the receiving chamber 22.

Further, the sensor assembly 10 may be at least partially located in the aperture 203. In other words, the sensor assembly 10 is partially located in the aperture 203, or the entire sensor assembly 10 is located in the aperture 203. In this way, the sensor assembly 10 and the housing 20 can form a relatively compact structure, thereby reducing a volume of the electronic device 100.

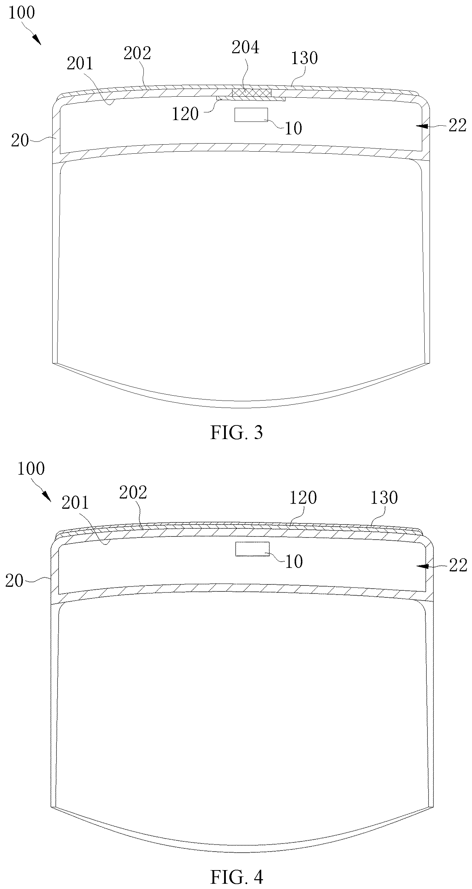

Referring to FIG. 3, in some embodiments, the housing 20 includes a light-transmitting portion 204 arranged to correspond to the sensor assembly 10, and the electrochromic device 120 is attached to an inner surface 201 of the light-transmitting portion 204. In other words, the housing 20 is at least partially light-transmissive, allowing the sensor assembly 10 to transmit signals to the outside and receive signals from the outside. For example, the light-emitting component 11 can emit light to the outside through the light-transmitting portion 204. The depth camera 12 can obtain depth information of a target object through the light-transmitting portion 204.

The light-transmitting portion 204 may be made of a light-transmitting material, e.g., an acrylic material. A cross section of the light-transmitting portion 204 may be a square shape, a round shape, or in an irregular shape, etc. It should be noted that visible or invisible light can be transmitted through the light-transmitting portion 204. Parts of the housing 20 other than the light-transmitting portion 204 may be light-transmissive or non-light-transmissive.

Referring to FIG. 4, in some embodiments, the housing 20 is a light-transmitting housing, and the electrochromic device 120 is attached to the outer surface 202 and wraps the outer surface 202. In other words, the electrochromic device 202 covers the outer surface 202 of the housing 20. In this way, the electrochromic device 120 can not only cover the sensor assembly 10, but also improve the appearance effect of the electronic device 100.

For example, the electrochromic device 120 can be controlled to present different colors based on different requirements, so as to change the overall appearance of the electronic device 100. It can be understood that, once a voltage of the electrochromic device 120 is changed, the electrochromic device 120 can present different colors. For example, the electrochromic device 120 can present green, red, blue, or a gradient color, such that the electronic device 100, as a whole, presents green, red, or blue color, or gradient color, etc.

It should be noted that, for ease of understanding, FIG. 4 only illustrates that the electrochromic device 120 is attached to a part of the outer surface 202 of the housing 20.

Further, the electronic device 100 includes an antireflection film 130 provided on the electrochromic device 120, and the electrochromic device 120 is sandwiched between the outer surface 202 and the antireflection film 130. In this way, the antireflection film 130 can not only protect the electrochromic device 120, but also improve the overall appearance of the electronic device 100. A material of the antireflection film 130 can be calcium fluoride, etc., and the antireflection film 130 is configured to reduce reflection and increase the light transmittance.

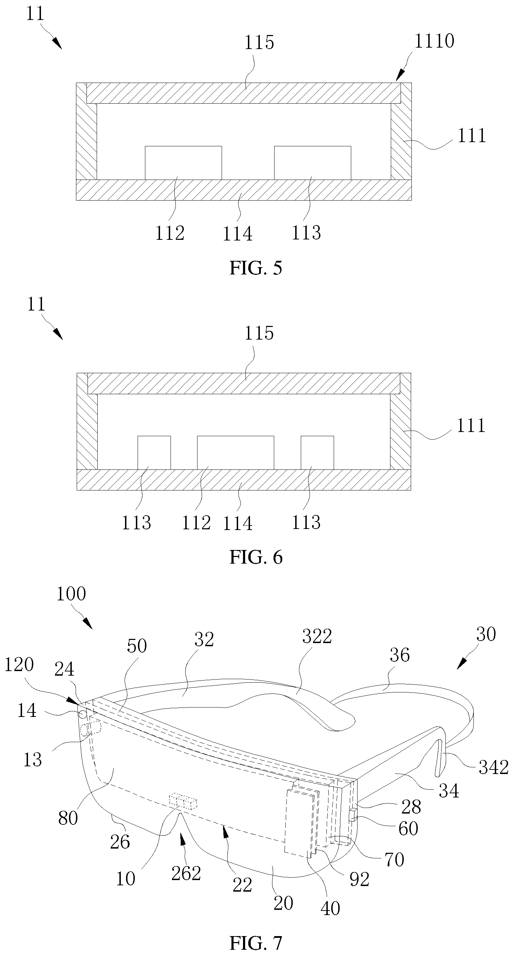

Referring to FIG. 5, in this embodiment, the light-emitting component 11 includes an encapsulation casing 111, a first light-emitting source 112, a second light-emitting source 113, a substrate 114, and a diffuser 115. The first light-emitting source 112 and the second light-emitting source 113 are both arranged on the substrate 114 and located within the encapsulation casing 111. The substrate 114 is fixedly connected to the encapsulation casing 111. For example, the substrate 114 is fixedly connected to the encapsulation casing 111 by means of bonding or welding.

Specifically, the encapsulation casing 111 may be made of a material such as plastic or metal. For example, the material of the encapsulation casing 111 may be stainless steel. A cross section of the encapsulation casing 111 may be in a shape of square, circle, oval, or the like. An opening 1110 is defined at an end of the encapsulation casing 111 facing away from the substrate 114.

The first light-emitting source 112 is configured to emit first light to the outside of the electronic device 100. The second light-emitting source 113 is configured to emit second light to the outside of the electronic device 100 and supplement light for the environment camera 13. The depth camera 12 is configured to receive the first light reflected by the target object, so as to obtain the depth information of the target object. Further, both the first light and the second light can exit the electronic device 100 via the diffuser 115.

In this embodiment, both the first light and the second light are infrared light, and a wavelength of the first light is different from a wavelength of the second light. For example, the wavelength of the first light is 940 nm and the wavelength of the second light is 850 nm. In addition, in other embodiments, the first light and/or the second light may be visible light. It can be understood that when the first light is infrared light, the depth camera 12 is an infrared camera.

As illustrated in FIG. 6, in some embodiments, a plurality of second light-emitting sources 113 is provided, and the second light-emitting sources 113 are arranged at intervals around the first light-emitting source 112. For example, four second light-emitting sources 113 are provided and arranged at equal angular intervals around the first light-emitting source. The first light-emitting source 112 and/or the second light-emitting source 113 include a vertical cavity surface emitting laser (VCSEL) chip, and the VCSEL chip includes a plurality of VCSEL light sources arranged in an array.

The substrate 114 may be a flexible circuit board, a rigid circuit board, or a combination thereof.

The diffuser 115 is provided at the opening 1110. The diffuser 115 is configured to diffuse the first light and the second light, such that the first light and the second light can be uniformly projected onto the target object.

In the electronic device 100 according to the embodiment of the present disclosure, the first light-emitting source 112 and the second light-emitting source 113 are both arranged in the same encapsulation casing 111, such that the structure of the light-emitting component 11 is more compact, thereby reducing the volume of the electronic device 100.

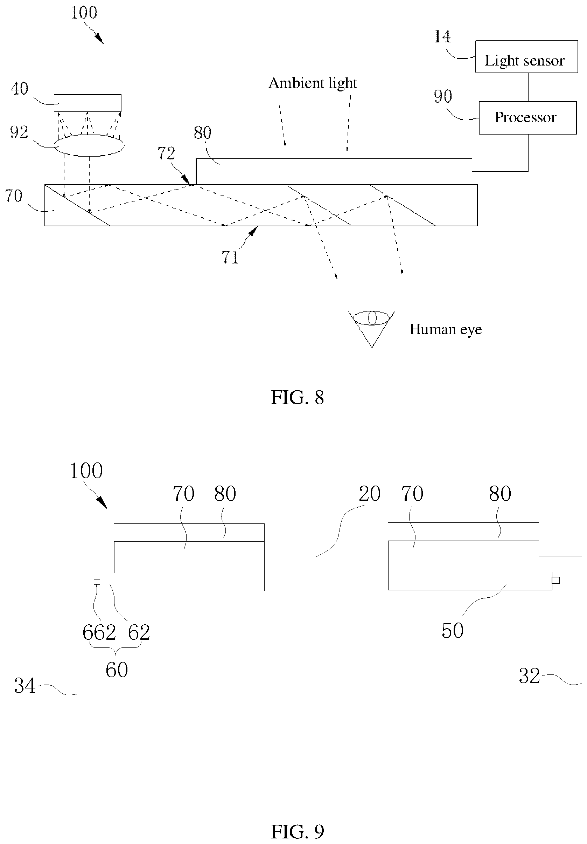

Referring to FIG. 7 and FIG. 8, the electronic device 100 according to the embodiment of the present disclosure includes a display 40, a light-guiding component 70, and a light quantity adjustment component 80. The light-emitting component 11, the depth camera 12, and the environment camera 13 are all arranged to avoid the display 40. The light-emitting component 11, the depth camera 12 and the environment camera 13 are all arranged to avoid the light-guiding component 70.

The light-guiding component 70 is arranged separately from the display 40. The light-guiding component 70 includes a first side 71, and a second side 72 opposite to the first side 71. The light-guiding component 70 is configured to guide light generated by the display 40, allowing the light to exit the electronic device 100 from the first side 71. The light quantity adjustment component 80 is disposed on the second side 72, and the light quantity adjustment component 80 is configured to adjust an amount of ambient light incident on the second side 72.

In related AR device, the user can see a content displayed by the AR device in a real scene through the AR device. It can be understood that ambient light and light generated by the AR device enter human eyes at the same time. When the ambient light has a relatively higher brightness, a contrast between a display brightness of the AR device and the ambient brightness may be too low, and thus the human eyes can hardly identify the content displayed by the AR device. When the ambient light has a relatively lower brightness, the contrast between the display brightness of the AR device and the ambient brightness may be too high, and thus the content displayed by the VR device may be too dazzling for the human eyes and cause eye fatigue.

Generally, in the related art, in order to solve a problem that the contrast between the display brightness of the AR device and the ambient brightness is too high or too low, the display brightness of the AR device is adjusted. However, with a high ambient brightness, if the display brightness of the AR device is increased to improve clarity of an image observed by the human eyes, power consumption of the AR device may be great, and thus a large amount of heat generated thereby may affect the user experience.

In the electronic device 100 according to the embodiments of the present disclosure, the light quantity adjustment component 80 can adjust an amount of ambient light incident from the second side 72 and exiting the electronic device 100 from the first side 71, such that the amount of ambient light can less affect the light generated by the display 40 and exiting the electronic device 100 from the first side 71, thereby facilitating watching the content displayed on the display 40 by the user and improving the user experience.

It can be understood that when the user wears the electronic device 100, the human eyes are located outside the first side 71. Therefore, the light generated by the display 40 can enter the human eyes after exiting the electronic device 100 from the first side 71, such that the user can see an image displayed on the display 40.

The ambient light enters the human eyes after sequentially passing through the light quantity adjustment component 80, the second side 72, and the first side 71, such that the user can see ambient objects. Therefore, the light quantity adjustment component 80 provided by the present disclosure can adjust the ambient light entering the human eyes, thereby mitigating the influence of the ambient light exerted on the image seen by the human eyes.

Referring to FIG. 7 to FIG. 9, the electronic device 100 according to the embodiment of the present disclosure further includes a support component 30, a refractive component 50, an adjustment mechanism 60, a processor 90, a light sensor 14, and a collimating component 92.

The housing 20 is an external component of the electronic device 100 and plays a role of protecting and fixing internal components of the electronic device 100. The internal components can be enclosed by the housing 20 and protected from being directly damaged by external factors.

Specifically, in this embodiment, the housing 20 can be configured to fix at least one of the display 40, the refractive component 50, the adjustment mechanism 60, the light-guiding component 70, and the light quantity adjustment component 80. In an example illustrated in FIG. 7, the receiving chamber 22 is defined by the housing 20, and the display 40 and the refractive component 50 are received in the receiving chamber 22. The adjustment mechanism 60 partially protrudes from the housing 20.

The housing 20 further includes a top housing wall 24, a bottom housing wall 26 and a side housing wall 28. A notch 262 recessing towards the top housing wall 24 is defined in the middle of the bottom housing wall 26. That is, the housing 20 is roughly in a B-like shape. When the user wears the electronic device 100, the electronic device 100 can be supported on the user's bridge of nose through the notch 262, thereby guaranteeing the stability of the electronic device 100 and wear comfort of the user. The adjustment mechanism 60 may partially protrude from the side housing wall 28, allowing the user to adjust the refractive component 50.

In addition, the housing 20 may be manufactured by machining an aluminum alloy with a computerized numerical control (CNC) machine tool, or may be injection molded using polycarbonate (PC) or using PC and acrylonitrile butadiene styrene plastic (ABS). The specific manufacturing method and material of the housing 20 are not limited in the present disclosure.

The support component 30 is configured to support the electronic device 100. When the user wears the electronic device 100, the electronic device 100 may be fixed on the user's head through the support component 30. In the example illustrated in FIG. 7, the support component 30 includes a first bracket 32, a second bracket 34 and an elastic band 36.

The first bracket 32 and the second bracket 34 are symmetrically arranged with respect to the notch 262. Specifically, the first bracket 32 and the second bracket 34 are rotatably arranged on side edges of the housing 20. When the user does not need to use the electronic device 100, the first bracket 32 and the second bracket 34 can be stacked to be close to the housing 20 for storage. When the user needs to use the electronic device 100, the first bracket 32 and the second bracket 34 can be unfolded to exert the support function thereof.

A first bending portion 322 is formed at an end of the first bracket 32 facing away from the housing 20, and the first bending portion 322 is bent towards the bottom housing wall 26. In this way, when the user wears the electronic device 100, the first bending portion 322 can be supported on the user's ear to prevent the electronic device 100 from slipping off.

Similarly, a second bent portion 342 is formed at an end of the second bracket 34 facing away from the housing 20. The explanation and description of the second bending portion 342 can refer to that of the first bending portion 322, which is not described in detail herein for brevity.

The elastic band 36 is detachably connected to the first bracket 32 and the second bracket 34. In this way, when the user wears the electronic device 100 and performs vigorous movements, the electronic device 100 can be further fixed by the elastic band 36 to prevent the electronic device 100 from loosening or even falling during the vigorous movements. It can be understood that in other examples, the elastic band 36 may be omitted.

In this embodiment, the display 40 includes an organic light-emitting (OLED) display screen. The OLED display screen does not require a backlight, which is beneficial to a thin and light design of the electronic device 100. Moreover, the OLED screen has a large viewing angle but consumes low power, which is conducive to saving power consumption.

Of course, the display 40 can also be a light-emitting diode (LED) display or a micro-LED display. These displays are merely examples and the embodiments of the present disclosure are not limited to any of these examples.

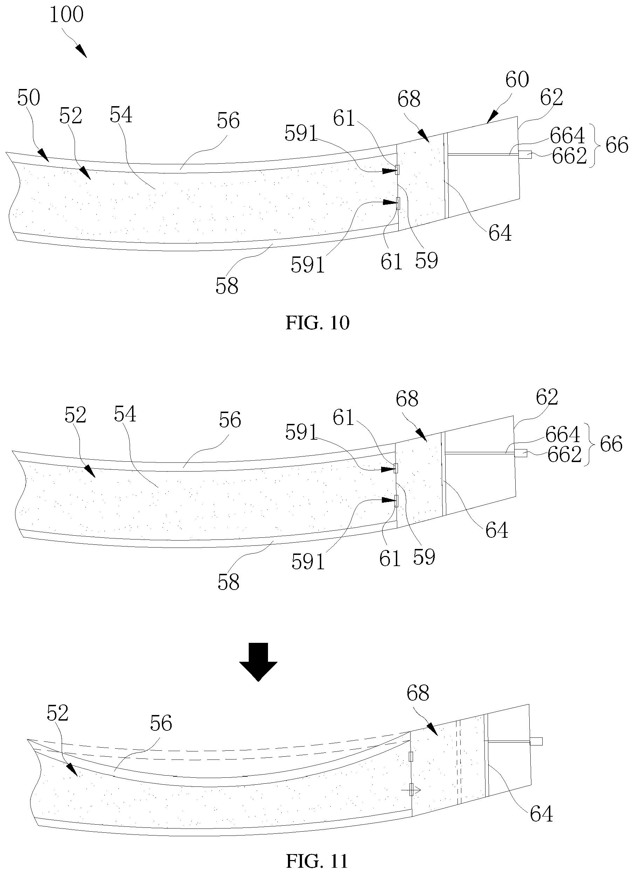

Referring to FIG. 10, the refractive component 50 is arranged on a side of the display 40. In this embodiment, the refractive component is located on the first side 71 of the light-guiding component 70.

The refractive component 50 includes a refractive chamber 52, a light-transmitting liquid 54, a first film layer 56, a second film layer 58, and a side wall 59.

The light-transmitting liquid 54 is filled in the refractive chamber 52. The adjustment mechanism 60 is configured to adjust an amount of the light-transmitting liquid 54 for adjusting a form of the refractive component 50. Specifically, the second film layer 58 is opposite to the first film layer 56, the side wall 59 connects the first film layer 56 with the second film layer 58. The refractive chamber 52 is defined by the first film layer 56, the second film layer 58, and the side wall 59. The adjustment mechanism 60 is configured to adjust the amount of the light-transmitting liquid 54 for changing a shape of the first film layer 56 and/or the second film layer 58.

In this way, a refractive function of the refractive component 50 is realized. Specifically, "changing the shape of the first film layer 56 and/or the second film layer 58" includes three cases. In a first case, the shape of the first film layer 56 is changed, but the shape of the second film layer 58 is not changed; in a second case, the shape of the second film layer 58 is changed, but the shape of the first film layer 56 is not changed; and in a third case, both the shape of the first film layer 56 and the shape of the second film layer 58 are changed. It should be noted that, for the convenience of explanation, in this embodiment, the first case is taken as an example for description.

The first film layer 56 may have elasticity. It can be understood that, since a pressure in the refractive chamber 52 changes with a change in the amount of the light-transmitting liquid 54 in the refractive chamber 52, the form of the refractive component 50 changes accordingly.

In an example, when the adjustment mechanism 60 reduces the amount of the light-transmitting liquid 54 in the refractive chamber 52, the pressure in the refractive chamber 52 is reduced, and a difference between a pressure outside the refractive chamber 52 and a pressure inside the refractive chamber 52 is increased, and thus the refractive chamber 52 becomes more concave in shape.

In another example, when the adjustment mechanism 60 increases the amount of the light-transmitting liquid 54 in the refractive chamber 52, the pressure in the refractive chamber 52 is increased, and the difference between the pressure outside the refractive chamber 52 and the pressure inside the refractive chamber 52 is reduced, and thus the refractive chamber 52 becomes more convex in shape.

In this way, the form of the refractive component 50 can be adjusted by adjusting the amount of the light-transmitting liquid 54.

The adjustment mechanism 60 is connected to the refractive component 50. The adjustment mechanism 60 is configured to adjust the form of the refractive component 50 to adjust a refractive degree of the refractive component 50. Specifically, the adjustment mechanism 60 includes a chamber body 62, a sliding member 64, a driving component 66, an adjustment chamber 68, and a switch 61.

The sliding member 64 is slidably arranged in the chamber body 62. The driving component 66 is connected to the sliding member 64. The adjustment chamber 68 is defined by both the chamber body 62 and the sliding member 64. The adjustment chamber 68 is in communication with the refractive chamber 52 through the side wall 59. The driving component 66 is configured to drive the sliding member 64 to slide relative to the chamber body 62 for adjusting a volume of the adjustment chamber 68, thereby adjusting the amount of the light-transmitting liquid 54 in the refractive chamber 52.

In this way, the amount of the light-transmitting liquid 54 in the refractive chamber 52 is adjusted through adjusting the volume of the adjustment chamber 68 by means of the sliding member 64. In an example, referring to FIG. 11, the sliding member 64 slides away from the side wall 59. In this case, the volume of the adjustment chamber 68 increases, a pressure in the adjustment chamber 68 decreases, and the light-transmitting liquid 54 in the refractive chamber 52 enters the adjustment chamber 68, such that the first film layer 56 is gradually recessed inwardly.

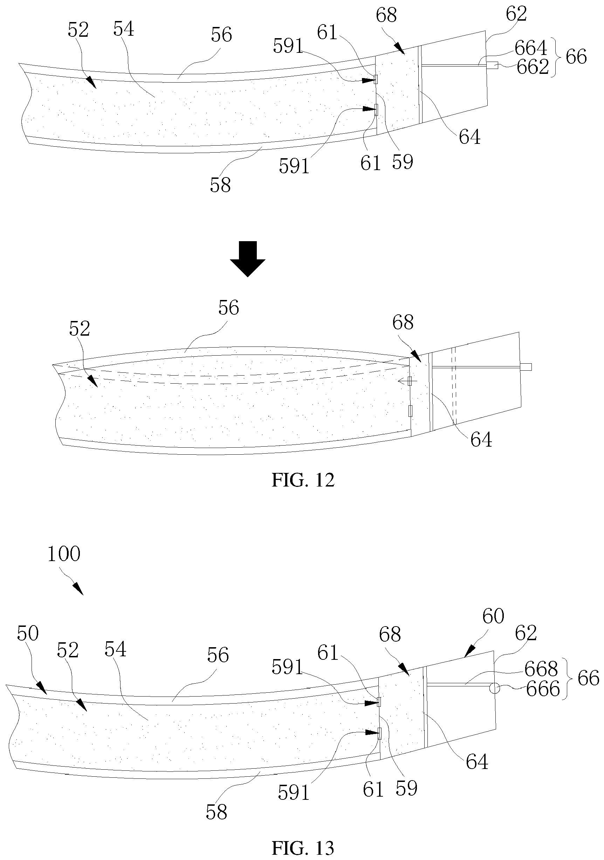

In another example, referring to FIG. 12, the sliding member 64 slides towards the side wall 59. In this case, the volume of the adjustment chamber 68 decreases, the pressure in the adjustment chamber 68 increases, and the light-transmitting liquid 54 in the adjustment chamber 68 enters the refractive chamber 52. Therefore, the first film layer 56 gradually protrudes outwardly.

A flow channel 5 is defined on the side wall 59 and is in communication with the adjustment chamber 68 and the refractive chamber 52. The adjustment mechanism 60 includes the switch 61 provided in the flow channel 5, and the switch 61 is configured to control open and close states of the flow channel 5.

In this embodiment, two switches 61 are provided. Both switches 61 are one-way switches. One switch 61 is configured to control the light-transmitting liquid 54 to flow from the adjustment chamber 68 to the refractive chamber 52, and the other switch 61 is configured to control the light-transmitting liquid 54 to flow from the refractive chamber 52 to the adjustment chamber 68.

In this way, the flow of the light-transmitting liquid 54 between the adjustment chamber 68 and the refractive chamber 52 is realized through the switches 61 so as to maintain a pressure balance on both sides of the side wall 59. As described above, the change in the volume of the adjustment chamber 68 may cause the pressure in the adjustment chamber 68 to change, thereby realizing the flow of the light-transmitting liquid 54 between the adjustment chamber 68 and the refractive chamber 52. The switches 61 control the open and close states of the flow channel 5, so as to control the flow of the light-transmitting liquid 54 between the adjustment chamber 68 and the refractive chamber 52, thereby controlling an adjustment of the form of the refractive component 50.

In an example, referring to FIG. 11, opened is the switch 61 that controls the light-transmitting liquid 54 to flow from the refractive chamber 52 to the adjustment chamber 68. In this case, the sliding member 64 slides away from the side wall 59 to increase the volume of the adjustment chamber 68, and thus the pressure in the adjustment chamber 68 decreases. Consequently, the light-transmitting liquid 54 in the refractive chamber 52 enters the adjustment chamber 68 through the switch 61, and the first film layer 56 is gradually recessed inwardly.

In another example, closed is the switch 61 that controls the light-transmitting liquid 54 to flow from the refractive chamber 52 to the adjustment chamber 68. In this case, even the sliding member 64 slides away from the side wall 59 to increase the volume of the adjustment chamber 68 and to reduce the pressure in the adjustment chamber 68, the light-transmitting liquid 54 in the refractive chamber 52 cannot enter the adjustment chamber 68, and thus the form of the first film layer 56 does not change.

In another example, referring to FIG. 12, opened is the switch 61 that controls the light-transmitting liquid 54 to flow from the adjustment chamber 68 to the refractive chamber 52. In this case, the sliding member 64 slides towards the side wall 59 to reduce the volume of the adjustment chamber 68, and thus the pressure in the adjustment chamber 68 increases. Consequently, the light-transmitting liquid 54 in the adjustment chamber 68 enters the refractive chamber 52 through the switch 61, and the first film layer 56 gradually protrudes outwardly.

In another example, closed is the switch 61 that controls the light-transmitting liquid 54 to flow from the adjustment chamber 68 to the refractive chamber 52. In this case, even the sliding member 64 slides towards the side wall 59 to reduce the volume of the adjustment chamber 68 and to increase the pressure in the adjustment chamber 68, the light-transmitting liquid 54 in the adjustment chamber 68 cannot enter the refractive chamber 52, and thus the form of the first film layer 56 does not change.

The driving component 66 can drive the sliding member 64 to slide, depending upon various structures and principles.

In the examples illustrated in FIG. 8 to FIG. 12, the driving component 66 includes a knob 662 and a screw 664. The screw 664 is connected to the knob 662 and the sliding member 64. The knob 662 is configured to drive the screw 664 to rotate, so as to drive the sliding member 64 to slide relative to the chamber body 62.

In this way, the sliding member 64 can be driven by the knob 662 and the screw 664. With the cooperation between the screw 664 and the knob 662, a rotational motion of the knob 662 can be converted into a linear motion of the screw 664. Consequently, when the user rotates the knob 662, the screw 664 can drive the sliding member 64 to slide relative to the chamber body 62, so as to change the volume of the adjustment chamber 68, thereby adjusting the amount of the light-transmitting liquid 54 in the refractive chamber 52. The knob 662 can protrude from the housing 20 for the user to perform rotation.

Specifically, the knob 662 is formed with a threaded portion, the screw 664 is formed with a threaded portion that matches the threaded portion of the knob 662, and the knob 662 and the screw 664 are connected to each other through threads.

While the knob 662 is rotating, the switch 61 can be opened correspondingly. In this way, the light-transmitting liquid 54 can flow to reach the pressure balance on both sides of the side wall 59.

In an example, the knob 662 rotates clockwise and the sliding member 64 slides away from the side wall 59 to open the switch 61 that controls the light-transmitting liquid 54 to flow from the refractive chamber 52 to the adjustment chamber 68. In another example, the knob 662 rotates counterclockwise and the sliding member 64 slides towards the side wall 59 to open the switch 61 that controls the light-transmitting liquid 54 to flow from the adjustment chamber 68 to the refractive chamber 52.

It should be noted that in this embodiment, a rotation angle of the knob 662 is not correlated to the refractive degree of the refractive component 50, and the user can rotate the knob 662 to any position to have the optimal visual experience. Of course, in other embodiments, the rotation angle of the knob 662 may be correlated to the refractive degree of the refractive component 50. In the present disclosure, it is not specifically limited whether the rotation angle of the gear 666 and the refractive degree of the refractive component 50 are correlated to each other.

Referring to FIG. 13, the driving component 66 includes a gear 666 and a rack 668 engaging with the gear 666. The rack 668 connects the gear 666 and the sliding member 64. The gear 666 is configured to drive the rack 668 to move, so as to drive the sliding member 64 to slide relative to the chamber body 62.

In this way, the sliding member 64 can be driven by the gear 666 and the rack 668. With the cooperation between the gear 666 and the rack 668, a rotational motion of the gear 666 can be converted into a linear motion of the rack 668. Consequently, when the user rotates the gear 666, the rack 668 can drive the sliding member 64 to slide relative to the chamber body 62, so as to change the volume of the adjustment chamber 68, thereby adjusting the amount of the light-transmitting liquid 54 in the refractive chamber 52. The gear 666 may protrude from the housing 20 for the user to perform rotation.

Similarly, while the gear 666 is rotating, the switch 61 can be opened correspondingly. In this way, the light-transmitting liquid 54 can flow to reach the pressure balance on both sides of the side wall 59.

In an example, when the gear 666 rotates clockwise to enable the rack 668 to engage with the gear 666, a length of the rack 668 is reduced, and thus the sliding member 64 is pulled to move away from the side wall 59, thereby opening the switch 61 that controls the light-transmitting liquid 54 to flow from the adjustment chamber 68 to the refractive chamber 52.

In another example, when the gear 666 rotates counterclockwise to enable the rack 668 engaged with the gear 666 to disengage from the gear 666, the length of the rack 668 is increased, and thus the sliding member 64 is pushed to move towards the side wall 59, thereby opening the switch 61 that controls the light-transmitting liquid 54 to flow from the adjustment chamber 68 to the refractive chamber 52.

Similarly, in this embodiment, the rotation angle of the gear 666 is not correlated to the refractive degree of the refractive component 50, and the user can rotate the gear 666 to any position to have the optimal visual experience. Of course, in other embodiments, the rotation angle of the gear 666 may be correlated to the refractive degree of the refractive component 50. In the present disclosure, it is not specifically limited whether the rotation angle of the gear 666 and the refractive degree of the refractive component 50 are correlated to each other.

It should be noted that the refractive component 50 is not merely limited to the above-mentioned structure including the refractive chamber 52, the light-transmitting liquid 54, the first film layer 56, the second film layer 58, and the side wall 59, and any structure is possible as long as the refractive degree of the refractive component 50 can be changed. For example, in other implementations, the refractive component 50 may include a plurality of lenses, and a driving member configured to drive each lens to move from a storage position to a refractive position. In this way, the refractive degree of the refractive component 50 can be changed by a combination of the plurality of lenses. Of course, the driving member may also drive each lens at the refractive position to move along a refractive axis, thereby changing the refractive degree of the refractive component 50.

Therefore, the form of the above refractive component includes a shape and a state of the refractive component. The above-mentioned structure of the refractive chamber 52, the light-transmitting liquid 54, the first film layer 56, the second film layer 58, and the sidewall 59 changes the refractive degree by changing a shape of the first film layer 56 and/or the second film layer 58; and the above-mentioned structure of the plurality of lenses and the driving member changes the refractive degree by changing a state of the plurality of lenses.

Referring to FIG. 8 and FIG. 9, the light-guiding component 70 is located between the refractive component 50 and the light quantity adjustment component 80. The light-guiding component 70 may be a plate-shaped light guide element, and the light-guiding component 70 may be made of a light-transmitting material such as resin. As illustrated in FIG. 8, after the light generated by the display 40 enters the light-guiding component 70, the light in different propagation directions propagates in the light-guiding component 70 by total reflection and exit the light-guiding component 70 from the first side 71 of the light-guiding component 70, thereby allowing the human eyes to see the content displayed on the display 40.

The light quantity adjustment component 80 may be fixed to the light-guiding component 70 through an optical glue. The light quantity adjustment component 80 includes an electrochromic element, and a light transmittance of the electrochromic element is changed after a voltage is applied to the electrochromic element. In this way, an amount of light passing through the electrochromic element can be adjusted by changing the light transmittance of the electrochromic element, thereby adjusting an amount of ambient light passing through the second side 72 and the first side 71.

It can be understood that a stable and reversible color change the electrochromic element occurs under an action of an external electric field, exhibiting a reversible appearance change in color and transparency. In this way, the electrochromic element can realize the change of the light transmittance.

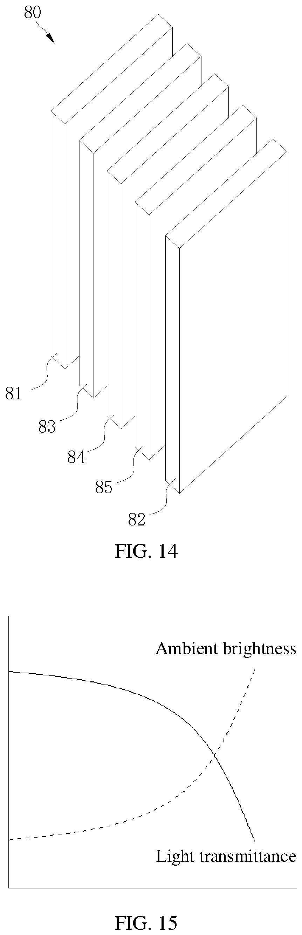

Specifically, referring to FIG. 14, the electrochromic element may include a first conductive layer 81, a second conductive layer 82, an electrochromic layer 83, an electrolyte layer 84, and an ion storage layer 85 that are arranged in a stacked manner. The electrochromic layer 83 is disposed between the first conductive layer 81 and the second conductive layer 82. The first conductive layer 81 and the second conductive layer 82 are configured to cooperatively apply a voltage to the electrochromic layer 83. The electrolyte layer 84 and the ion storage layer 85 are stacked in sequence between the electrochromic layer 83 and the second conductive layer 82. In this way, the first conductive layer 81 and the second conductive layer 82 can provide an electrochromic voltage to allow a change of light transmittance of the electrochromic, thereby changing the light transmittance of the electrochromic element, and the electrolyte layer and the ion storage layer 85 can ensure that the electrochromic layer 83 can change the light transmittance normally.

It should be noted that the above-mentioned structure of the electrochromic device 120 is similar to a structure of the electrochromic element. Therefore, the structure of the electrochromic device 120 provided by the present disclosure can be referred to the structure of the electrochromic element, which is not described in detail herein.

In the embodiment of the present disclosure, the processor 90 is connected to the light quantity adjustment component 80. The processor 90 is configured to control the light transmittance of the light quantity adjustment component 80, so as to allow the light quantity adjustment component 80 to adjust the amount of ambient light incident on the second side 72. In this way, the processor 90 can accurately adjust the light transmittance of the light quantity adjustment component 80.

As described above, when the light quantity adjustment component 80 is an electrochromic element, the processor 90 can control the voltage applied to the electrochromic element for controlling the light transmittance of the electrochromic element. In other words, the light transmittance of the light quantity adjustment component 80 is controlled by adjusting the voltage applied to the electrochromic element. The processor 90 may include a circuit board, a processing chip disposed on the circuit board, and other elements and components.

The light sensor 14 is connected to the processor 90. The light sensor 14 is configured to detect the ambient brightness, and the processor 90 is configured to adjust the light transmittance of the light quantity adjustment component 80 based on the ambient brightness. In this case, the ambient brightness and the light transmittance of the light quantity adjustment component 80 have an inverse correlation relationship.

The light transmittance of the light quantity adjustment component 80 can be automatically adjusted in such a manner that the user can clearly see the content displayed on the display 40, and eye fatigue of the user is less likely to occur.

As illustrated in FIG. 15, when the ambient brightness increases, the light transmittance of the light quantity adjustment component 80 decreases; and when the ambient brightness decreases, the light transmittance of the light quantity adjustment component 80 increases. In this way, a contrast of the display screen of the display 40 is in a comfortable viewing range for human eyes, thereby improving the user experience.

The collimating component 92 is disposed between the display 40 and the light-guiding component 70. The collimating component 92 is configured to collimate the light generated by the display 40 before the light is transmitted to the light-guiding component 70. In this way, the collimating component 92 can convert the light generated by the display 40 into parallel light before the light enters the light guiding component 70, thereby reducing light loss.

The collimating component 92 may include a plurality of lenses, which may be superimposed onto each other to collimate light. The light generated by the display 40 enters the light-guiding component 70 after passing through the collimating component 92, and the light is reflected totally or diffracted in the light-guiding component 70 and then exits the first side 71 of the light-guiding component 70.

In some embodiments, when a current ambient brightness is lower than a predetermined brightness, the processor 90 is configured to: turn on the first light-emitting source 112, the depth camera 12, and the environment camera 13, allowing the depth camera 12 to obtain the depth information of the target object; and turn on the second light-emitting source 113 to supplement light for the environment camera 13, allowing the environment camera 13 to obtain the spatial environment information.

In the electronic device 100 according to the embodiments of the present disclosure, the second light-emitting source 113 can be turned on to supplement light for the environment camera 13 when the current ambient brightness is lower than the predetermined brightness. In this way, the environment camera 13 can capture images with a satisfying quality, such that the electronic device 100 can still obtain environment information in dark environment.

It can be understood that the second light emitted by the second light-emitting source 113 can be transmitted to the target object to increase a light intensity in the environment when the ambient light is relatively weak.

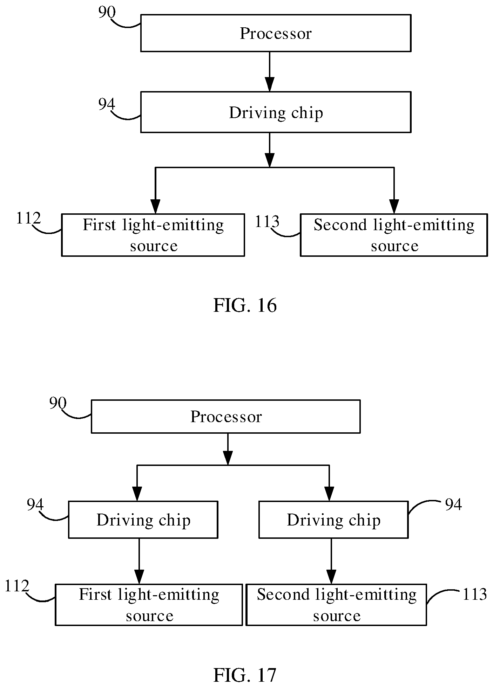

Referring to FIG. 16, in some embodiments, the electronic device 100 includes one driving chip 94. The driving chip 94 is connected to the processor 90, the first light-emitting source 112, and the second light-emitting source 113. When the current ambient brightness is lower than the predetermined brightness, the processor 90 is configured to control the driving chip 94 to output a first driving signal and a second driving signal. The first driving signal is configured to drive the first light-emitting source 112, and the second driving signal is configured to drive the second light-emitting source 113. In this way, one driving chip 94 can drive two light-emitting sources to reduce a hardware quantity of the electronic device 100, thereby reducing the cost of the electronic device 100.

Referring to FIG. 17, in some embodiments, the electronic device 100 includes two driving chips 94, which are both connected to the processor 90. One driving chip 94 is connected to the first light-emitting source 112, and the other driving chip 94 is connected to the second light-emitting source 113. When the current ambient brightness is lower than the predetermined brightness, The processor 90 is configured to control one of the driving chips 94 to output the first driving signal and control the other driving chip 94 to output the second driving signal. The first driving signal is configured to drive the first light-emitting source 112, and the second driving signal is configured to drive the second light-emitting source 113. In this way, these two driving chips 94 control the corresponding light-emitting sources, respectively, allowing a working state of each light-emitting source to be controlled in an easier manner.

In some embodiments, the processor 90 is configured to obtain the current ambient brightness through the light sensor 14. In other words, the light sensor 14 may detect the current ambient brightness and transmit the detected current ambient brightness to the processor 90. In this way, it is convenient and effective to obtain the current ambient brightness.

In some embodiments, the processor 90 is configured to obtain a spatial environment image captured by the environment camera 13, and calculate a gray level of the spatial environment image; and obtain the current ambient brightness based on the gray level. In this embodiment, the light sensor 14 can be omitted to reduce the cost of the electronic device 100.

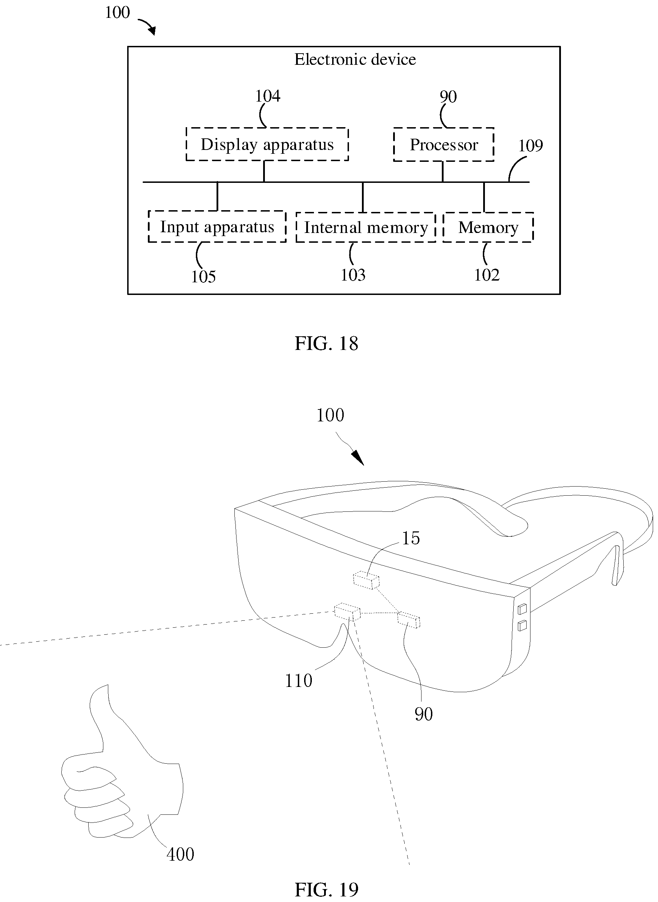

FIG. 18 is a schematic block diagram illustrating modules in the electronic device 100 according to an embodiment. The electronic device 100 includes the processor 90, a memory 102 (for example, a non-volatile storage medium), an internal storage 103, a display apparatus 104, and an input apparatus 105, which are connected through a system bus 109.

The processor 90 can be configured to provide computing and control capabilities for supporting the operation of the entire electronic device 100. The internal storage 103 of the electronic device 100 provides an execution environment for computer-readable instructions in the memory 102. The display apparatus 104 of the electronic device 100 can be the display 40 provided on the electronic device 100. The input apparatus 105 can be an acoustic and electrical element and a vibration sensor that are provided on the electronic device 100; or input apparatus 105 can be a button, a trackball, a touchpad, and the like that are provided on the electronic device 100; or input apparatus 105 can be a keyboard, a touchpad, a mouse, and the like that are externally connected to the electronic device 100. The electronic device may be a smart bracelet, a smart watch, a smart helmet, a pair of electronic glasses, and the like.

In related technologies, an image of an object can be obtained through the camera, with the image recognition technology, subsequent to steps of image segmentation, extraction of hand features and calculation of gesture nodes, etc., an action type of the gesture can be determined, so as to complete an interaction of the gesture. However, such a solution has the disadvantages that the camera must always be turned on to capture images, and a central processing unit or a digital signal processor must continuously run the related gesture algorithm to process image information. The accompanying problems may include: 1. relatively high overall power consumption, serious heating, and shortened effective use time of a battery; 2. high occupancy rate of the central processing unit or the digital signal processor, which leads to the problems of failure of quick running other algorithms and processes as well as system sluggishness.

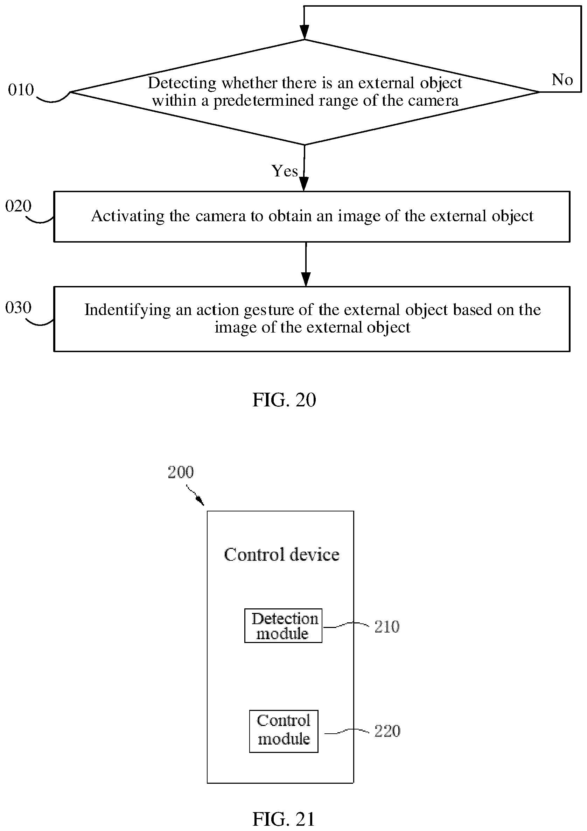

In this regard, referring to FIG. 19 and FIG. 20, the embodiments of the present disclosure provide a control method for an electronic device 100 including a camera 110, and the control method includes the following actions.

At block 010, it is detected whether an external object 400 exists within a predetermined range of the camera 110.

At block 020, when the external object 400 exists within the predetermined range of the camera 110, the camera 110 is activated to obtain an image of the external object 400.

At block 030, an action gesture of the external object 400 is identified based on the image of the external object 400.

Referring to FIG. 21, a control device 200 of the embodiments of the present disclosure is applied in the electronic device 100. The control device 200 includes a detection module 210 and a control module 220. Block 010 may be implemented by the detection module 210, and blocks 020 and 030 may be implemented by the control module 220. In other words, the detection module 210 is configured to detect whether the external object 400 exists within the predetermined range of the camera 110; and the control module 220 is configured to activate the camera 110 to obtain the image of the external object 400 when there is an external object within the predetermined range of the camera 110, and identify the action gesture of the external object 400 based on the image of the external object 400.

In some embodiments, blocks 010 to 030 may be implemented by the processor 90. In other words, the processor 90 is configured to: detect whether the external object 400 exists within the predetermined range of the camera 110; activate the camera 110 to obtain the image of the external object 400 when there is an external object within the predetermined range of the camera 110; and identify the action gesture of the external object 400 based on the image of the external object 400.

In the control method, control device 200, electronic device 100, and storage medium according to the embodiments of the present disclosure, when the external object 400 exists within the predetermined range of the camera 110, the camera 110 is activated to identify the action gesture of the external object 400, thereby preventing the camera 110 from being activated all the time. In this way, an operation time of the camera 110 and the processor 90 can be reduced, so as to reduce the power consumption and heat generation of the electronic device 100.

Specifically, at block 010, the predetermined range of the camera 110 refers to, in a field of view of the camera 110, a fan-shaped or conical range with a lens center surface of the camera 110 as a center and a predetermined distance as a radius; or the predetermined range of the camera 110 refers to, in the field of view of the camera 110, a fan-shaped or conical range formed with a center of an image sensor of the camera 110 as the center and the predetermined distance as a radius in the field of view of the camera 110.

The predetermined distance can be specifically set according to actual needs. For example, the predetermined distance is 10cm, 20cm, 30cm, 40cm, or 60cm.

The external object 400 may be an organ of human body such as a hand, an eye, and a head; or may be a non-living object such as a pen and a book.

Block 020 of activating the camera 110 refers to driving the camera 110 to operate, so as to enable the camera 110 to sense light intensity of external environment and generate the image of the external object 400 based on an imaging effect of the lens of the camera 110. For example, the camera 110 may be the environment camera 110 or the depth camera 110, as described above. When the camera 110 is the environment camera 110, the image acquired by the camera 110 is a two-dimensional image. When the camera 110 is the depth camera 110, the image acquired by the camera 110 is a three-dimensional image. Therefore, the image of the external object 400 mentioned in present disclosure may be the two-dimensional image or the three-dimensional image.

At block 030, the image of the external object 400 includes, for example, information about a type, a shape, and a size of the object, and said identifying an action gesture is a series of processes, for example, segmenting the image of the external object 400, extracting features, identifying the type of the object, determining whether the action gesture is satisfied, etc. In this action block, the processor 90 cooperates with related hardware to execute a corresponding program to implement block 030, thereby identifying the action gesture.

It should be understood that the action gesture mentioned in the present embodiment includes at least one of a gesture and an eye motion. It can be understood that the gesture is a hand motion of the user. The hand motion may be that the user control his/her finger to perform a predetermined action. For example, the user makes a thumbs up or spread wide the five fingers.

The eye motion may be a motion of eyeballs, for example, the eyeballs turn to the left or to the right. Alternatively, the eye motion may also be the user's motion of blinking, for example, a duration that the user closes his/her eyes or a frequency of blinking.

Of course, in other embodiments, the action gesture is not limited to the hand and eye motion discussed above.

In some embodiments, the electronic device 100 includes a proximity sensor 15 arranged on a side of the camera 110, and block 010 includes: activating the proximity sensor 15 in response to a trigger instruction from the user to trigger the proximity sensor 15 to detect whether an external object 40 exists within the predetermined range of the camera 110.

In some embodiments, the processor 90 is configured to activate the proximity sensor 15 in response to the trigger instruction from the user to detect whether the external object 400 exists within the predetermined range of the camera 110 by means of the proximity sensor 15.

Specifically, the proximity sensor 15 can be arranged on an upper side of the camera 110 or on a lower side of the camera 110, and an orientation and position of the proximity sensor 15 with respect to the camera 110 is not limited herein. In addition, the proximity sensor 15 may be in contact with or spaced apart from the camera 110.

In the present disclosure, the trigger instruction may be generated based on a user operation. For example, the user presses an input apparatus such as a key or a touch screen of the electronic device 100 to cause the electronic device 100 to start to execute a program of the action gesture and generate the trigger instruction.

It should be understood that the terms such as "up" and "down", which involve the orientation and position, refer to the orientation and position when the electronic device 100 is in a normal operation state.

In an example, the proximity sensor 15 may emit infrared rays and receive the infrared rays reflected by the external object 400, so as to detect and obtain a distance between the external object 400 and the electronic device 100. Of course, the proximity sensor 15 can detect the distance between the external object 400 and the electronic device 100 by means of ultrasonic waves, electromagnetic fields, and millimeter waves.

In this way, the proximity sensor 15 can accurately detect whether the external object 400 exists within the predetermined range of the camera 110. In addition, the power consumption of the proximity sensor 15 is relatively low, which can further reduce the power consumption of the electronic device 100 in the process of implementing the action gesture.

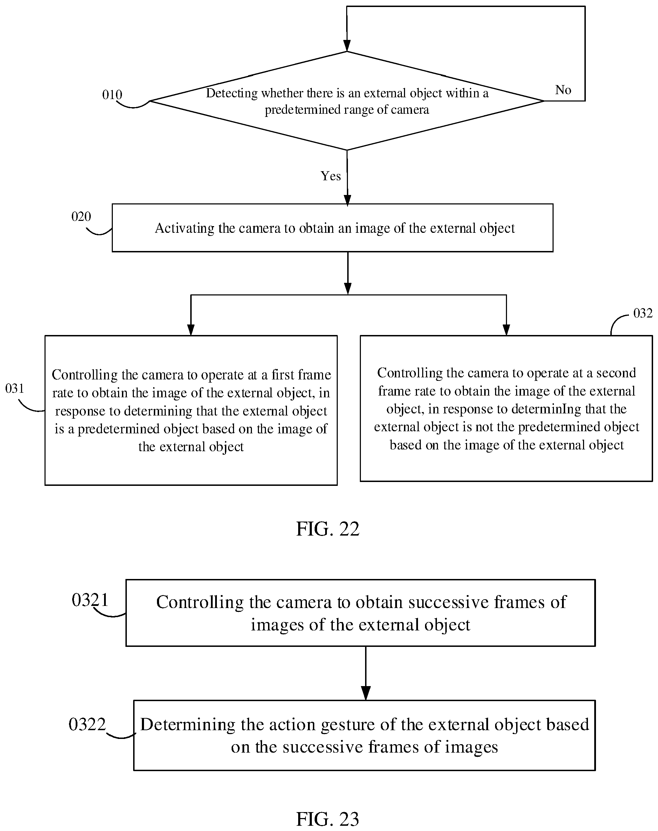

Referring to FIG. 22, in some embodiments, block 030 includes the following action blocks.

At block 031, in response to determining that the external object 400 is a predetermined object based on the image of the external object 400, the camera 110 is controlled to operate at a first frame rate to obtain the image of the external object 400 to obtain the action gesture of the external object 400.

At block 032, in response to determining that the external object 400 is not the predetermined object based on the image of the external object 400, the camera 110 is controlled to operate at a second frame rate to obtain the image of the external object 400 to determine whether the external object 400 is the predetermined object, where the second frame rate is smaller than the first frame rate.

In some embodiments, blocks 031 and 032 may be implemented by the processor 90. In other words, in response to determining that the external object 40 is the predetermined object based on the image of the external object 400, the processor 90 is configured to control the camera 110 to operate at the first frame rate to obtain the image of the external object 400 to obtain the action gesture of the external object 400; and in response to determining that the external object 400 is not the predetermined object based on the image of the external object 400, the processor 90 is configured to control the camera 110 to operate at the second frame rate smaller than the first frame rate to obtain the image of the external object 400.

Specifically, it can be understood that not all external objects 400 can implement the action gesture. Therefore, by determining the type of the external object 400 and adjusting the frame rate of the operation of the camera 110, it can be avoided that the camera 110 operates at a relatively high frame rate all the time and has high energy consumption.

At block 031, the predetermined object may be an object that can implement the action gesture. For example, the predetermined object is human hands, head, and/or eyes. It can be understood that when the predetermined object is a human head, the head may move, for example, nodding and shaking the head. When the external object 400 is the predetermined object, it can be predicted that the external object 400 will make the action gesture. Therefore, the camera 110 is controlled to obtain the image of the external object 400 at a relatively high frame rate, so as to accurately obtain the gesture of the external object 400.

At block 032, when the external object 400 is not the predetermined object, it can be predicted that the external object 400 will not make the action gesture. Therefore, the camera 110 is controlled to obtain the image of the external object 400 at a relatively low frame rate, thereby lowering the power consumption of the electronic device 100.

In addition, it should be understood that a result of the image recognition of the electronic device 100 is the basis to determine whether the external object 400 is the predetermined object. In an example that the external object 400 is the human head, it cannot be determined that the external object 400 is the head through analysis when the camera 110 only captures a partial image of the head; and it can be determined that the external object 400 is the head through analysis only when a complete image of the head is captured by the camera 110.

Therefore, at block 031, the camera operates at the relatively low frame rate to continuously obtain the image of the external object 400, so as to further identify whether the external object 400 is the predetermined object during an external movement. In this way, the recognition accuracy of the external object 400 and action gesture can be enhanced.

In an example, the first frame rate is 30 frames per second or 60 frames per second, and the second frame rate is 5 frames per second or 10 frames per second.

Referring to FIG. 23, in some embodiments, block 031 includes the following action blocks.

At block 0321, the camera 110 is controlled to obtain successive frames of images of the external object 400.

At block 0322, the action gesture of the external object 400 is determined based on the successive frames of images.

In some embodiments, blocks 0321 and 0323 may be implemented by the processor 90. In other words, the processor 90 is configured to control the camera 110 to obtain successive frames of images of the external object 400, determine whether the action gesture of the external object 400 is a predetermined gesture based on the successive frames of images, and generate a corresponding control instruction when the action gesture is the predetermined gesture.

It can be understood that the action gesture is generally a dynamic process. Therefore, the recognition of the action gesture is a continuous process. Based on the successive frames of images of the external object 400, the action gesture of the external object 400 can be accurately obtained, so as to generate the corresponding control instruction more accurately.

The predetermined gesture includes at least one of clicking, sliding, or zooming. In an example, the external object 400 is a hand, and the camera 110 can be controlled to obtain ten successive frames of images to determine whether the hand has made a "clicking" action gesture based on these ten frames of images, and the control instruction corresponding to "clicking" is generated when the hand has made a "clicking" action gesture.

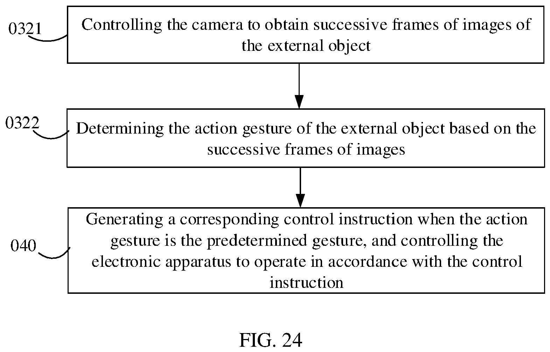

Referring to FIG. 24, in some embodiments, the control method further includes the following action blocks.

At block 040, a corresponding control instruction is generated when the action gesture is the predetermined gesture, and the electronic device 100 is controlled to operate in accordance with the control instruction.

In some embodiments, block 040 may be implemented by the processor 90. In other words, the processor 90 is configured to generate the corresponding control instruction when the action gesture is the predetermined gesture, and control the electronic device 100 to operate in accordance with the control instruction.

In this way, the electronic device 100 can exert the corresponding functions based on the action gesture of the external object 400. For example, the electronic device 100 can be controlled to unlock the screen, take a screenshot, turn off the screen picture, and fast-forward a video in accordance with the control instruction.

In an example, after the user makes the "clicking" gesture, the electronic device 100 can play a video based on the "clicking" action.

In some embodiments, subsequent to block 030, the control method further includes: detecting whether the external object 400 moves out of the predetermined range; and deactivating the camera 110 when the external object 400 moves out of the predetermined range.

In some embodiments, the processor 90 is configured to detect whether the external object 400 moves out of the predetermined range; and deactivate the camera 110 when the external object 400 moves out of the predetermined range.

In this way, once the external object 400 moves out of the predetermined range of the camera 110, it can be considered that no more action gesture will be generated, and the camera 110 is deactivated to lower the power consumption of the electronic device 100 and prolong a usable time of the electronic device 100.

The present disclosure provides a non-volatile computer-readable storage medium including computer-executable instructions. The computer-executable instructions, when executed by one or more processors 90, cause the processor 90 to implement the control method according to any embodiment as described above.

Those skilled in the art can understand that the structures illustrated in the drawings are merely schematic diagrams of parts of the structures involving the solutions of the present disclosure, and does not constitute limitations on the electronic device of the present disclosure. The specific electronic device may include more or fewer components than those illustrated in the drawings. Alternatively, some components may be combined or the components may be arranged in different manners.

Throughout the present disclosure, description with reference to "an embodiment," "some embodiments," "illustrative embodiments," "an example," "a specific example," or "some examples," means that a particular feature, structure, material, or characteristic described in connection with the embodiment or example is included in at least one embodiment or example of the present disclosure. The appearances of the above phrases in various places throughout the present disclosure are not necessarily referring to the same embodiment or example of the present disclosure. Furthermore, the particular features, structures, materials, or characteristics described here may be combined in any suitable manner in one or more embodiments or examples of the present disclosure.

Although the embodiments of present disclosure have been explained and described as above, it can be appreciated by those skilled in the art that changes, alternatives, and modifications can be made to the embodiments without departing from the principle and spirit of the present disclosure. The scope of the present disclosure is defined by the claims as attached and their equivalents.

## Claims

1. A control method for an electronic device comprising a camera, the control method comprising:
detecting whether there is an external object within a predetermined range of the camera;
activating the camera to obtain an image of the external object when there is an external object within the predetermined range of the camera; and
identifying an action gesture of the external object based on the image of the external object.

2. The control method according to claim 1, wherein the electronic device further comprises a proximity sensor arranged on a side of the camera, and
wherein said detecting whether there is an external object within the predetermined range of the camera comprises:
activating the proximity sensor in response to a trigger instruction from a user to trigger the proximity sensor to detect whether there is an external object within the predetermined range of the camera.

3. The control method according to claim 1, wherein said identifying the action gesture of the external object based on the image of the external object comprises:
controlling the camera to operate at a first frame rate to obtain the image of the external object to obtain the action gesture of the external object, in response to determining that the external object is a predetermined object based on the image of the external object; and
controlling the camera to operate at a second frame rate to obtain the image of the external object to determine whether the external object is the predetermined object, in response to determining that the external object is not the predetermined object based on the image of the external object, wherein the second frame rate is smaller than the first frame rate.

4. The control method according to claim 3, wherein said controlling the camera to operate at the first frame rate to obtain the image of the external object to obtain the action gesture of the external object comprises:
controlling the camera to obtain successive frames of images of the external object; and
determining the action gesture of the external object based on the successive frames of images.

5. The control method according to claim 1, further comprising, subsequent to said identifying the action gesture based on the image of the external object:
detecting whether the external object moves out of the predetermined range; and
deactivating the camera when the external object moves out of the predetermined range.

6. The control method according to claim 1, further comprising:
generating a corresponding control instruction when the action gesture is a predetermined gesture; and
controlling the electronic device to operate in accordance with the control instruction.

7. The control method according to claim 6, wherein the predetermined gesture comprises at least one of clicking, sliding, or zooming.

8. A control device for an electronic device comprising a camera, the control device comprising:
a detection module configured to detect whether there is an external object within a predetermined range of the camera; and
a control module configured to activate the camera to obtain an image of the external object when there is an external object within the predetermined range of the camera, and identify an action gesture of the external object based on the image of the external object.

9. An electronic device, comprising a camera and a processor,
wherein the processor is configured to:
detect whether there is an external object within a predetermined range of the camera;
activate the camera to obtain an image of the external object when there is an external object within the predetermined range of the camera; and
identify an action gesture of the external object based on the image of the external object.

10. The electronic device according to claim 9, wherein the processor is further configured to:
control the camera to operate at a first frame rate to obtain the image of the external object to obtain the action gesture of the external object, in response to determining that the external object is a predetermined object based on the image of the external object; and
control the camera to operate at a second frame rate to obtain the image of the external object to determine whether the external object is the predetermined object, in response to determining that the external object is not the predetermined object based on the image of the external object, wherein the second frame rate is smaller than the first frame rate.

11. The electronic device according to claim 10, wherein the processor is further configured to:
control the camera to obtain successive frames of images of the external object; and
determine the action gesture of the external object based on the successive frames of images.

12. The electronic device according to claim 9, wherein the electronic device further comprises a proximity sensor arranged on a side of the camera, and
wherein the processor is further configured to activate the proximity sensor in response to a trigger instruction from a user to trigger the proximity sensor to detect whether there is an external object within the predetermined range of the camera.

13. The electronic device according to claim 9, wherein the processor is further configured to:
detect whether the external object moves out of the predetermined range; and
deactivate the camera when the external object moves out of the predetermined range.

14. The electronic device according to claim 9, wherein the processor is further configured to:
generate a corresponding control instruction when the action gesture is a predetermined gesture; and
control the electronic device to operate in accordance with the control instruction.

15. The electronic device according to claim 14, wherein the predetermined gesture comprises at least one of clicking, sliding, or zooming.

16. The electronic device according to claim 9, further comprising:
a first light-emitting source configured to emit first light to outside of the electronic device;
a second light-emitting source configured to emit second light to outside of the electronic device; and
a driving chip,
wherein the processor is configured to control the driving chip to output a first driving signal for driving the first light-emitting source and a second driving signal for driving the second light-emitting source when a current ambient brightness is smaller than a predetermined brightness.

17. The electronic device according to claim 9, further comprising:
a first light-emitting source configured to emit first light to outside of the electronic device;
a second light-emitting source configured to emit second light to outside of the electronic device; and
two driving chips, one of the two driving chips being connected to the first light-emitting source, the other one of the two driving chips being connected to the second light-emitting source, electronic device
wherein the processor is configured to control one of the two driving chips to output a first driving signal for driving the first light-emitting source and control the other one of the two driving chips to output a second driving signal for driving the second light-emitting source when a current ambient brightness is smaller than a predetermined brightness.

18. The electronic device according to claim 16 or 17, further comprising a depth camera configured to receive the first light reflected by a target object to obtain depth information of the target object.

19. The electronic device according to claim 16 or 17, wherein a wavelength of the first light is different from a wavelength of the second light.

20. A non-volatile computer-readable storage medium, comprising computer-executable instructions, wherein the computer-executable instructions, when executed by one or more processors, cause the one or more processors to implement the control method according to any one of claims 1 to 7.
